# EUROPÄISCHE PATENTSCHRIFT

(11) **EP 3 691 891 B1**
(45) Veröffentlichungstag und Bekanntmachung des Hinweises auf die Patenterteilung: **24.01.2024**
(21) Anmeldenummer: 18762860.7
(22) Anmeldetag: 10.09.2018
(51) Int. Cl.: B32B 17/10

(54) **VERFAHREN ZUR HERSTELUNG EINER VERBUNDSCHEIBE MIT ELEKTRISCH STEUERBAREN OPTISCHEN EIGENSCHAFTEN**
METHOD OF PRODUCING A LAMINATED GLASS WITH ELECTRICALLY CONTROLLABLE OPTICAL PROPERTIES
PROCÉDÉ DE FABRICATION D'UN VITRAGE FEUILLETÉ PRÉSENTANT DES PROPRIÉTÉS OPTIQUES CONTRÔLABLES ÉLECTRIQUEMENT

(30) Priorität: 04.10.2017 EP 17194703
(43) Veröffentlichungstag der Anmeldung: 12.08.2020
(73) Patentinhaber: SAINT-GOBAIN GLASS FRANCE, 92400 Courbevoie (FR)
(72) Erfinder: KLEIN, Marcel, 52499 Baesweiler (DE); SCHMIDT, Georg, 52379 Langerwehe (DE); YEH, Li-Ya, 52511 Geilenkirchen (DE); LABROT, Michael, 52072 Aachen (DE); DRÖGE, Alicia, 52066 Aachen (DE)
(74) Vertreter: Feist, Florian Arno
(86) Internationale Anmeldenummer: PCT/EP2018/074247
(87) Internationale Veröffentlichungsnummer: WO 2019/068419

(56) Entgegenhaltungen:
- EP-A1- 3 610 323
- WO-A1-2007/122426
- WO-A1-2007/122427
- WO-A1-2007/122428
- WO-A1-2011/033313
- WO-A1-2012/154663
- WO-A1-2014/029536
- US-A1- 2011 171 443
- US-A1- 2015 298 431
- US-A1- 2015 301 367
- US-A1- 2016 138 328
- US-A1- 2017 122 027

## Beschreibung

Die Erfindung betrifft eine Verfahren zur Herstellung einer Verbundscheibe mit elektrisch steuerbaren optischen Eigenschaften.

Verbundscheiben mit elektrisch steuerbaren Funktionselementen sind als solche bekannt. Die optischen Eigenschaften der Funktionselemente können durch eine angelegte elektrische Spannung verändert werden. Ein Beispiel für solche Funktionselemente sind SPD-Funktionselemente (*suspended particle device*), die beispielsweise aus EP 0876608 B1 und WO 2011033313 A1 bekannt sind. Durch die angelegte Spannung lässt sich die Transmission von sichtbarem Licht durch SPD-Funktionselemente steuern. Ein weiteres Beispiel sind PDLC-Funktionselemente (*polymer dispersed liquid crystal*), die beispielsweise aus DE 102008026339 A1 bekannt sind. Die aktive Schicht enthält dabei Flüssigkristalle, welche in eine Polymermatrix eingelagert sind. Wird keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Das PDLC-Funktionselement wirkt weniger durch eine Herabsetzung der Gesamttransmission als durch eine Erhöhung der Streuung, wodurch die freie Durchsicht verhindert oder ein Blendschutz gewährleistet werden kann.

Es wurden Windschutzscheiben vorgeschlagen, bei denen durch ein solches Funktionselement eine elektrisch steuerbare Sonnenblende realisiert ist, um die herkömmliche mechanisch klappbare Sonnenblende in Kraftfahrzeugen zu ersetzen. Windschutzscheiben mit elektrisch steuerbaren Sonnenblenden sind beispielsweise bekannt aus DE 102013001334 A1, DE 102005049081 B3, DE 102005007427 A1 und DE 102007027296 A1.

SPD- und PDLC-Funktionselemente sind als Mehrschichtfolie kommerziell erhältlich, wobei die aktive Schicht und die zum Anlegen einer Spannung erforderlichen Flächenelektroden zwischen zwei Trägerfolien, typischerweise aus PET, angeordnet sind. Bei der Herstellung der Verbundscheibe wird das Funktionselement in der gewünschten Größe und Form aus der Mehrschichtfolie ausgeschnitten und zwischen die Folien einer Zwischenschicht eingelegt, mittels derer zwei Glasscheiben miteinander zur Verbundscheibe laminiert werden. Die Seitenkante des Funktionselements ist dabei offen, so dass die aktive Schicht über die Seitenkante Kontakt zu Material der Zwischenschicht der Verbundscheibe hat. Für die Zwischenschicht wird häufig Polyvinylbutyral (PVB) verwendet, welches Weichmacher enthält. Der Weichmacher oder andere chemische Bestandteile der Zwischenschicht können über die offene Kante des Funktionselements in die aktive Schicht eindiffundieren, was zur Korrosion oder Degradation der aktiven Schicht führen kann. Dies äußert sich insbesondere als Ent- oder Verfärbung der aktiven Schicht im Randbereich, was die Funktion und das optische Erscheinungsbild des Funktionselements negativ beeinflussen kann.

In WO2012154663A1 und WO2014023475A1 wird vorgeschlagen, die Kante des Funktionselements mit einem polymeren Band, vorzugsweise aus Polyimid, zu versiegeln, um die Beeinträchtigung der aktiven Schicht zu vermeiden. Ist die betreffende Seitenkante des Funktionselements in Durchsicht durch die Verbundscheibe allerdings sichtbar, so hat diese Lösung den Nachteil, dass das Band eventuell optisch wahrnehmbar ist, was ebenfalls ästhetisch wenig ansprechend ist.

WO2014166641 A1 offenbart eine Mehrschichtfolie mit elektrisch schaltbaren optischen Eigenschaften, umfassend, blattförmig angeordnet, mindestens eine erste Trägerfolie, eine erste elektrisch leitfähige Schicht, eine aktive Schicht, eine zweite elektrisch leitfähige Schicht und eine zweite Trägerfolie, wobei die Mehrschichtfolie mindestens zwei umlaufende Trennlinien aufweist, die einen isolierten Randbereich von der ersten elektrisch leitenden Schicht und der zweiten elektrisch leitenden Schicht trennen, wobei die erste Trägerfolie und die zweite Trägerfolie in mindestens einem Teil des isolierten Randbereichs zu einem versiegelten Bereich verschweißt sind und die Trennlinien eine Breite von 10 µm bis 500 µm aufweisen.

Der vorliegenden Erfindung liegt die Aufgabe zugrunde, eine verbesserte Verbundscheibe mit elektrisch steuerbaren optischen Eigenschaften bereitzustellen, bei der zumindest bereichsweise keine Diffusion zwischen der aktiven Schicht des Funktionselements und der Zwischenschicht auftritt. Außerdem sollen effiziente Herstellungsverfahren für eine solche Verbundscheibe bereitgestellt werden.

Die Aufgabe der vorliegenden Erfindung wird durch ein Verfahren zur Herstellung einer Verbundscheibe mit elektrisch steuerbaren optischen Eigenschaften gemäß dem unabhängigen Anspruch 1 gelöst. Bevorzugte Ausführungen gehen aus den Unteransprüchen hervor.

Die Verbundscheibe umfasst mindestens eine Außenscheibe und eine Innenscheibe, die über eine Zwischenschicht miteinander verbunden sind. Die Verbundscheibe ist dafür vorgesehen, in einer Fensteröffnung beispielsweise eines Fahrzeugs, eines Gebäudes oder eines Raums, den Innenraum gegenüber der äußeren Umgebung abzutrennen. Mit Innenscheibe wird im Sinne der Erfindung die dem Innenraum zugewandte Scheibe bezeichnet. Mit Außenscheibe wird die der äußeren Umgebung zugewandte Scheibe bezeichnet.

Die thermoplastische Zwischenschicht dient der Verbindung der beiden Scheiben, wie es bei Verbundscheiben üblich ist. Typischerweise werden thermoplastische Folien verwendet, aus denen die Zwischenschicht aufgebaut ist. Die Zwischenschicht enthält ein erstes thermoplastisches Material, ist auf Basis des ersten thermoplastischen Materials aufgebaut oder besteht aus dem ersten thermoplastischen Material. Die Zwischenschicht beziehungsweise das erste thermoplastische Material kann außer dem eigentlichen thermoplastischen Polymer (bevorzugt Ethylenvinylacetat (EVA), Polyvinylbutyral (PVB), Polyurethan (PU) oder Copolymere oder Gemische davon) weitere Bestandteile enthalten, beispielsweise UV- oder IR-Absorber Erfindungsgemäß enthält die thermoplastische Zwischenschicht einen Weichmacher.

Die Verbundscheibe enthält ein Funktionselement mit elektrisch steuerbaren optischen Eigenschaften, das in die Zwischenschicht eingelagert ist. Das Funktionselement ist zwischen mindestens zwei Schichten von thermoplastischem Material der Zwischenschicht angeordnet, wobei es durch die erste Schicht mit der Außenscheibe und durch die zweite Schicht mit der Innenscheibe verbunden ist. Bevorzugt ist die Seitenkante des Funktionselements vollständig von der Zwischenschicht umgeben, so dass sich das Funktionselement nicht bis zur Seitenkante der Verbundscheibe erstreckt und somit keinen Kontakt zur umgebenden Atmosphäre hat.

Das Funktionselement umfasst mindestens eine aktive Schicht, die zwischen einer ersten Trägerfolie und einer zweiten Trägerfolie angeordnet ist. Die aktive Schicht weist die veränderlichen optischen Eigenschaften auf, die durch eine an die aktive Schicht angelegte elektrische Spannung gesteuert werden können. Unter elektrisch steuerbaren optischen Eigenschaften werden im Sinne der Erfindung solche Eigenschaften verstanden, die stufenlos steuerbar sind, aber gleichermaßen auch solche, die zwischen zwei oder mehr diskreten Zuständen geschaltet werden können. Die besagten optischen Eigenschaften betreffen insbesondere die Lichttransmission und/oder das Streuverhalten. Das Funktionselement umfasst außerdem Flächenelektroden zum Anlegen der Spannung an die aktive Schicht, die bevorzugt zwischen den Trägerfolien und der aktiven Schicht angeordnet sind. Die Trägerfolien enthalten ein zweites thermoplastisches Material, bestehen daraus oder sind auf Basis davon aufgebaut. Das zweite thermoplastische Material unterscheidet sich vom ersten thermoplastischen Material der Zwischenschicht hinsichtlich der chemischen Zusammensetzung. So kann das erste thermoplastische Material auf Basis eines anderen thermoplastischen Polymers aufgebaut sein als das zweite thermoplastische Material. Grundsätzlich können die beiden thermoplastischen Materialien aber auch auf Basis desselben thermoplastischen Polymers aufgebaut sein und sich durch Zusätze, insbesondere den Weichmacheranteil, unterscheiden.

Erfindungsgemäß sind die erste Trägerfolie und die zweite Trägerfolie des Funktionselements entlang zumindest eines Bereichs der umlaufenden Seitenkante des Funktionselements miteinander verschmolzen. In diesem Bereich weist das Funktionselement keine offene Seitenkante auf, stattdessen ist die aktive Schicht vom zweiten thermoplastischen Material umgeben. Die aktive Schicht ist dadurch effektiv vom ersten thermoplastischen Material der Zwischenschicht isoliert, so dass keine Diffusion zwischen der Zwischenschicht und der aktiven Schicht stattfinden kann und eine Degradation der aktiven Schicht verhindert wird. Anders ausgedrückt ist der besagte Bereich der Seitenkante des Funktionselements versiegelt. Gegenüber der Versiegelung der Seitenkante mit einem zusätzlich aufgebrachten Material, beispielsweise einem polymeren Band, ist die erfindungsgemäße Lösung optisch unauffälliger, so dass die Verbundscheibe ästhetisch ansprechender ist oder auf eine Maskierung der Seitenkante des Funktionselements verzichtet werden kann. Das sind große Vorteile der vorliegenden Erfindung.

Der erfindungsgemäß versiegelte Bereich der Seitenkante des Funktionselements kann die gesamte umlaufende Seitenkante umfassen, mit Ausnahme etwaiger Stellen, an denen ein elektrischer Leiter zur elektrischen Kontaktierung der Flächenelektroden über die Seitenkante aus dem Funktionselement herausgeführt ist. Der besagte Bereich der Seitenkante kann aber auch nur einen Teil der umlaufenden Seitenkante umfassen, beispielsweise einen Bereich der Seitenkante, der in der Verbundscheibe sichtbar und nicht maskiert oder verdeckt ist.

In einer bevorzugten Ausgestaltung ist das Funktionselement ein PDLC-Funktionselement (*polymer dispersed liquid crystal*). Die aktive Schicht eines PDLC-Funktionselements enthält Flüssigkristalle, welche in eine Polymermatrix eingelagert sind. Wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht.

In einer weiteren bevorzugten Ausgestaltung ist das Funktionselement ein SPD-Funktionselement (*suspended particle device*). Dabei enthält die aktive Schicht suspendierte Partikel, wobei die Absorption von Licht durch die aktive Schicht mittels Anlegen einer Spannung an die Flächenelektroden veränderbar ist. Grundsätzlich ist es aber auch möglich, andere Arten von regelbaren Funktionselementen einzusetzen, beispielweise elektrochrome Funktionselemente. Die erwähnten regelbaren Funktionselemente und deren Funktionsweise sind dem Fachmann an sich bekannt, so dass an dieser Stelle auf eine ausführliche Beschreibung verzichtet werden kann.

Das Funktionselement umfasst typischerweise die aktive Schicht zwischen zwei Flächenelektroden. Die aktive Schicht weist die steuerbaren optischen Eigenschaften auf, welche über die an die Flächenelektroden angelegte Spannung gesteuert werden können. Die Flächenelektroden und die aktive Schicht sind typischerweise im Wesentlichen parallel zu den Oberflächen der Außenscheibe und der Innenscheibe angeordnet. Die Flächenelektroden sind mit einer externen Spannungsquelle auf an sich bekannte Art elektrisch verbunden. Die elektrische Kontaktierung ist durch geeignete Verbindungskabel, beispielsweise Folienleiter realisiert, welche optional über sogenannte Sammelleiter (bus bars), beispielsweise Streifen eines elektrisch leitfähigen Materials oder elektrisch leitfähige Aufdrucke, mit den Flächenelektroden verbunden sind. Die Dicke des Funktionselements beträgt beispielsweise von 0,4 mm bis 1 mm.

Die Flächenelektroden sind bevorzugt als transparente, elektrisch leitfähige Schichten ausgestaltet. Die Flächenelektroden enthalten bevorzugt zumindest ein Metall, eine Metalllegierung oder ein transparentes leitfähiges Oxid (transparent conducting oxide, TCO). Die Flächenelektroden können beispielsweise Silber, Gold, Kupfer, Nickel, Chrom, Wolfram, Indium-Zinnoxid (ITO), Gallium-dotiertes oder Aluminium-dotiertes Zinkoxid und / oder Fluordotiertes oder Antimon-dotiertes Zinnoxid enthalten. Die Flächenelektroden weisen bevorzugt eine Dicke von 10 nm bis 2 µm auf, besonders bevorzugt von 20 nm bis 1 µm, ganz besonders bevorzugt von 30 nm bis 500 nm.

Das Funktionselement liegt als Mehrschichtfolie mit zwei äußeren Trägerfolien vor. Bei einer solchen Mehrschichtfolie sind die Flächenelektroden und die aktive Schicht typischerweise zwischen den beiden Trägerfolien angeordnet. Mit äußerer Trägerfolie ist hier gemeint, dass die Trägerfolien die beiden Oberflächen der Mehrschichtfolie ausbilden. Das Funktionselement kann dadurch als laminierte Folie bereitgestellt werden, die vorteilhaft verarbeitet werden kann. Das Funktionselement ist durch die Trägerfolien vorteilhaft vor Beschädigung, insbesondere Korrosion geschützt. Die Mehrschichtfolie enthält in der angegebenen Reihenfolge zumindest eine Trägerfolie, eine Flächenelektrode, eine aktive Schicht, eine weitere Flächenelektrode und eine weitere Trägerfolie. Typischerweise weisen die Trägerfolien jeweils eine elektrisch leitfähige Beschichtung auf, die der aktiven Schicht zugewandt ist und als Flächenelektrode fungiert.

Das zweite thermoplastische Material der Trägerfolien ist bevorzugt Polyethylenterephthalat (PET) oder auf Basis davon aufgebaut, wie es bei kommerziell erhältlichen Funktionselementen üblich ist. Das zweite thermoplastische Material kann auch Gemische oder Copolymere von PET enthalten. Das zweite thermoplastische Material kann aber auch beispielsweise EVA, PVB, PU, Polypropylen, Polycarbonat, Polymethylmethacrylat, Polyacrylat, Polyvinylchlorid, Polyacetatharz, fluorinierte Ethylen-Propylene, Polyvinylfluorid und/oder Ethylen-Tetrafluorethylen sein oder auf Basis davon aufgebaut sein. Die Dicke jeder Trägerfolie beträgt bevorzugt von 0,1 mm bis 1 mm, besonders bevorzugt von 0,1 mm bis 0,2 mm. Typischerweise bestehen die beiden Trägerfolien aus demselben Material, wobei es grundsätzlich auch möglich ist, dass die beiden Trägerfolien aus unterschiedlichem Material bestehen. Dann besteht die erste Trägerfolie streng genommen aus dem zweiten thermoplastischen Material und die zweite Trägerfolie aus einem dritten thermoplastischen Material.

Die Erfindung ist besonders dann vorteilhaft, weil die Zwischenschicht beziehungsweise das erste thermoplastische Material einen Weichmacher enthält, weil die Diffusion des Weichmachers in die aktive Schicht durch die erfindungsgemäß versiegelte Seitenkante verhindert wird. Die Zwischenschicht besteht in einer besonders vorteilhaften Ausgestaltung aus weichmacherhaltigem Polyvinylbutyral (PVB) oder ist auf Basis davon aufgebaut. Typische, als Zwischenschicht eingesetzte PVB-Folien weisen einen Weichmacheranteil von mindestens 15 Gew.-% auf. Als Weichmacher werden beispielsweise aliphatische Diester des Tri- bzw. Tetraethylenglykols verwendet, wie Triethylenglykol-bis-(2-ethylhexanoat).

Die Zwischenschicht ist zumindest aus einer ersten thermoplastischen Schicht und einer zweiten thermoplastischen Schicht gebildet, zwischen denen das Funktionselement angeordnet ist. Das Funktionselement ist dann über einen Bereich der ersten thermoplastischen Schicht mit der Außenscheibe und über einen Bereich der zweiten thermoplastischen Schicht mit der Innenscheibe verbunden. Bevorzugt ragen die thermoplastischen Schichten umlaufend über das Funktionselement hinaus. Dort wo die thermoplastischen Schichten direkten Kontakt miteinander haben und nicht durch das Funktionselement voneinander getrennt sind, können sie beim Laminieren derart verschmelzen, dass die ursprünglichen Schichten unter Umständen nicht mehr erkennbar sind und stattdessen eine homogene Zwischenschicht vorliegt.

Eine thermoplastische Schicht kann beispielsweise durch eine einzige thermoplastische Folie ausgebildet werden. Eine thermoplastische Schicht kann auch aus Abschnitten unterschiedlicher thermoplastischer Folien gebildet werden, deren Seitenkanten aneinandergesetzt sind.

In einer bevorzugten Ausgestaltung ist das Funktionselement, genauer die Seitenkanten des Funktionselements umlaufend von einer dritten thermoplastischen Schicht umgeben. Die dritte thermoplastische Schicht ist rahmenartig ausgebildet mit einer Aussparung, in welche das Funktionselement eingelegt wird. Die dritte thermoplastische Schicht kann durch eine thermoplastische Folie gebildet werden, in welche die Aussparung durch Ausschneiden eingebracht worden ist. Alternativ kann die dritte thermoplastische Schicht auch aus mehreren Folienabschnitten um das Funktionselement zusammengesetzt werden. Die Zwischenschicht ist dann aus insgesamt mindestens drei flächig aufeinander angeordneten thermoplastischen Schichten gebildet, wobei die mittlere Schicht eine Aussparung ausweist, in der das Funktionselement angeordnet ist. Bei der Herstellung wird die dritte thermoplastische Schicht zwischen der ersten und der zweiten thermoplastischen Schicht angeordnet, wobei die Seitenkanten aller thermoplastischen Schichten bevorzugt in Deckung befindlich sind. Die dritte thermoplastische Schicht weist bevorzugt etwa die gleiche Dicke auf wie das Funktionselement. Dadurch wird der lokale Dickenunterschied, der durch das örtlich begrenzte Funktionselement eingebracht wird, kompensiert, so dass Glasbruch beim Laminieren vermieden werden kann und ein verbessertes optisches Erscheinungsbild entsteht.

Die Schichten der Zwischenschicht sind bevorzugt aus demselben Material ausgebildet, besonders bevorzugt aus weichmacherhaltigen PVB-Folien. Die Dicke jeder thermoplastischen Schicht beträgt bevorzugt von 0,2 mm bis 2 mm, besonders bevorzugt von 0,3 mm bis 1 mm, insbesondere von 0,3 mm bis 0,5 mm, beispielsweise 0,38 mm.

Die Außenscheibe und die Innenscheibe sind bevorzugt aus Glas gefertigt sind, besonders bevorzugt aus Kalk-Natron-Glas, wie es für Fensterscheiben üblich ist. Die Scheiben können aber auch aus anderen Glassorten gefertigt sein, beispielsweise Quarzglas, Borosilikatglas oder Aluminosilikatglas, oder aus starren klaren Kunststoffen, beispielsweise Polycarbonat oder Polymethylmethacrylat. Die Scheiben können klar sind, oder auch getönt oder gefärbt, solange die Windschutzscheibe im zentralen Sichtbereich eine ausreichende Lichttransmission aufweist, bevorzugt mindestens 70 % im Haupt-Durchsichtbereich A gemäß ECE-R43.

Die Außenscheibe, die Innenscheibe und/oder die Zwischenschicht können weitere geeignete, an sich bekannte Beschichtungen aufweisen, beispielsweise Antireflexbeschichtungen, Antihaftbeschichtungen, Antikratzbeschichtungen, photokatalytische Beschichtungen oder Sonnenschutzbeschichtungen oder Low-E-Beschichtungen).

Die Dicke der Außenscheibe und der Innenscheibe kann breit variieren und so den Erfordernissen im Einzelfall angepasst werden. Die Außenscheibe und die Innenscheibe weisen bevorzugt Dicken von 0,5 mm bis 5 mm auf, besonders bevorzugt von 1 mm bis 3 mm.

Die Erfindung umfasst ein Verfahren zur Herstellung einer Verbundscheibe mit elektrisch steuerbaren optischen Eigenschaften, mindestens umfassend die folgenden Verfahrensschritte:
a) Ein Funktionselement mit elektrisch steuerbaren optischen Eigenschaften wird in einer gewünschten Form und Größe bereitgestellt. Das Funktionselement umfasst mindestens eine aktive Schicht zwischen einer ersten Trägerfolie und einer zweiten Trägerfolie aus einem zweiten thermoplastischen Material. Die erste Trägerfolie und die zweite Trägerfolie werden entlang zumindest eines Bereichs der Seitenkante des Funktionselements miteinander verschmolzen.
b) Eine Außenscheibe, eine erste thermoplastische Schicht, das Funktionselement, eine zweite thermoplastische Schicht und eine Innenscheibe werden in dieser Reihenfolge übereinander angeordnet.
c) Die Außenscheibe und die Innenscheibe werden durch Lamination verbunden, wobei zumindest aus der ersten thermoplastischen Schicht und der zweiten thermoplastischen Schicht eine Zwischenschicht mit eingelagertem Funktionselement gebildet wird.

Funktionselemente sind als Mehrschichtfolien kommerziell erhältlich. Das Bereitstellen des Funktionselements in Verfahrensschritt (a) umfasst bevorzugt das Ausschneiden des Funktionselements aus einer solchen Mehrschichtfolie in der gewünschten Größe und Form, in der es später in die Verbundscheibe einlaminiert werden soll. Das Ausschneiden kann mechanisch erfolgen, beispielsweise mit einem Messer. In einer vorteilhaften Ausführung erfolgt das Ausschneiden mittels eines Lasers. Es hat sich gezeigt, dass die Seitenkante in diesem Fall stabiler ist als beim mechanischen Schneiden. Bei mechanisch geschnittenen Seitenkanten kann die Gefahr bestehen, dass sich das Material gleichsam zurückzieht, was optisch auffällig ist und die Ästhetik der Scheibe nachteilig beeinflusst. Die Wellenlänge des Lasers beträgt bevorzugt von 1 µm bis 15 µm, besonders bevorzugt von 8 µm bis 12 µm. Beispielsweise kann ein CO₂-Laser verwendet werden. Der Laser wird bevorzugt im Dauerstrichmodus betrieben, kann aber grundsätzlich auch gepulst betrieben werden. Die Laserleistung beträgt bevorzugt von 100 W bis 500 W, besonders bevorzugt von 200 W bis 300 W. Zum Schneiden der Mehrschichtfolie wird der Laserstrahl bevorzugt auf die Mehrschichtfolie fokussiert, wodurch eine hohe Leistungsdichte und eine dünne Schnittlinie gewährleistet werden.

Wesentlich für das erfindungsgemäße Verfahren ist das Verschmelzen der Trägerfolien im Randbereich des Funktionselements, wodurch die aktive Schicht versiegelt wird. Das Verschmelzen kann vor oder nach dem Bereitstellen des Funktionselements in der gewünschten Form, also dem Zuschneiden des Funktionselements, durchgeführt werden. In einer Ausführungsform wird das Funktionselement zunächst zugeschnitten und anschließend werden die Trägerfolien verschmolzen. Bei geeigneter Verfahrensführung ist es jedoch alternativ auch möglich, die Trägerfolien zunächst zu verschweißen, wobei die dazwischen befindliche aktive Schicht gleichsam "weggeschmolzen" wird, und das Funktionselement erst anschließen in die gewünschte Form zurecht zu schneiden.

Erfindungsgemäß erfolgt das Verschmelzen der ersten Trägerfolie und der zweiten Trägerfolie mittels Laserbestrahlung. Die Laserstrahlung wird dabei entlang des zu verschmelzenden Bereichs der Seitenkante des Funktionselements bewegt, wobei die Trägerfolien aufgeschmolzen werden und sich miteinander verbinden. Die Laserleistung und die Größe des Laserspots legen die Leistungsdichte der Laserstrahlung fest, welche wiederum zusammen mit der Bewegungsgeschwindigkeit den Energieeintrag bestimmt. Der Energieeintrag ist so zu wählen, dass die Trägerfolien ausreichend erwärmt werden, um miteinander zu verschmelzen.

Um einen ausreichend großen Bereich der Trägerfolien mit dem Laserstrahl zu beaufschlagen, wird erfindungsgemäß die Laserstrahlung nicht auf die Mehrschichtfolien fokussiert.

Auf dem Funktionselement ist die Laserstrahlung stattdessen defokussiert, um Strahlprofil mit größerer räumlicher Ausdehnung zu erreichen. Der Durchmesser des Strahlprofils (Laserspot) auf der Mehrschichtfolie ist von 0,5 mm bis 5 mm, besonders bevorzugt von 1 mm bis 3 mm. Die Laserleistung beträgt bevorzugt von 100 W bis 500 W, besonders bevorzugt von 200 W bis 300 W. Die Bewegungsgeschwindigkeit der Laserstrahlung beträgt bevorzugt höchstens 1 m/s. Die Wellenlänge des Lasers beträgt bevorzugt von 1 µm bis 15 µm, besonders bevorzugt von 8 µm bis 12 µm. Es wird ganz besonders bevorzugt ein CO₂-Laser mit einer Wellenlänge von etwa 10,6 µm verwendet. Der CO₂-Laser weist neben einer geeigneten Wellenlänge den Vorteil eines großflächigen Strahlprofils auf. Alternativ können aber auch Dioden- oder Festkörperlaser verwendet werden. Der Laser wird bevorzugt im Dauerstrichmodus betrieben. Wird der Laser gepulst betrieben, so beträgt die Pulsfrequenz bevorzugt mindestens 10 kHz, um einen ausreichenden Energieeintrag in die Trägerfolien zu gewährleisten.

In einer ersten Variante des Verschmelzens mittels Laserbestrahlung werden die erste Trägerfolie und die zweite Trägerfolie direkt miteinander verschmolzen. Die Strahlrichtung der Laserstrahlung sollte einen Winkel von 45° bis 90° mit dem Funktionselement einschließen, insbesondere im Wesentlichen senkrecht auf das Funktionselement treffen, also einen Winkel von etwa 90° mit dem Funktionselement einschließen. Dabei ist das Funktionselement im Wesentlichen horizontal angeordnet, wobei das Funktionselement bevorzugt auf einer festen Unterlage abgelegt ist und die Laserstrahlung bevorzugt von oben auf das Funktionselement trifft. So wird sichergestellt, dass das aufgeschmolzene Material der oberen Trägerfolie unter der Wirkung der Schwerkraft in Richtung der zweiten Trägerfolie fließt und sich mit dieser verbindet.

Während der Laserbestrahlung kann das Funktionselement optional zwischen zwei Fixierplatten angeordnet sein, wodurch das Funktionselement sicher und in flachem Zustand an Ort und Stelle gehalten wird. Das Funktionselement liegt auf der unteren Fixierplatte im Wesentlichen horizontal auf und die obere Fixierplatte liegt auf dem Funktionselement auf. Die obere Fixierplatte muss natürlich eine Durchführung in Form des zu verschmelzenden Bereichs der Seitenkante des Funktionselements aufweisen, damit das Funktionselement durch die Fixierplatte hindurch mit Laserstrahlung beaufschlagt werden kann. Die Durchführung erstreckt sich in Draufsicht entlang des zu verschmelzenden Bereichs der Seitenkante des Funktionselements (Längendimension) und weist eine Breite von beispielsweise 3 mm bis 10 mm auf. Als Fixierplatte eignen sich beispielsweise Metall- oder Stahlplatten mit einer Stärke von 2 mm bis 20 mm, bevorzugt von 2 mm bis 10 mm.

In einer zweiten Variante des Verschmelzens mittels Laserbestrahlung werden die Trägerfolie mittelbar über ein thermoplastisches Verbindungsstück miteinander verschmolzen. Der zu versiegelnde Bereich der Seitenkante des Funktionselements wird in der gewünschten Form bereitgestellt, insbesondere durch Schneiden einer Mehrschichtfolie. Auf den zu versiegelnden Bereich der offenen Seitenkante wird das Verbindungsstück aufgelegt.

Das Verbindungsstück besteht aus dem zweiten thermoplastischen Material, aus dem auch die Trägerfolien gefertigt sind. Das Funktionselement wird bevorzugt im Wesentlichen vertikal angeordnet, wobei der zu versiegelnde Bereich der Seitenkante nach oben weist, beispielsweise mittels geeigneter Fixiervorrichtungen. Das Verbindungsstück liegt auf der Seitenkante auf. Das Verbindungsstück wird dann mit dem Laser bestrahlt, wobei das aufgeschmolzene Material unter der der Wirkung der Schwerkraft in Richtung der Trägerfolien fließt und sich mit diesen verbindet. Die Laserstrahlung trifft bevorzugt von oben auf das Verbindungsstück, wobei sie einen Winkel von 0° bis 45° mit dem Funktionselement einschließt, bevorzugt etwa 0°.

Nach dem Verschmelzen der Trägerfolien kann es eventuell zu einem Kontakt der Flächenelektroden kommen, was zu einem Kurzschluss führt. Es ist daher vorteilhaft, den an den versiegelten Bereich der Seitenkante angrenzenden Randbereich mindestens einer Flächenelektrode elektrisch von der übrigen Flächenelektrode zu isolieren. Dies erfolgt bevorzugt mittels einer Isolierungslinie, die mittels Laserstrahlung in die Flächenelektrode einbracht wird. Die Isolierungslinie weist bevorzugt einen Abstand von 0,1 mm bis 5 mm zur Seitenkante der Flächenelektrode auf, besonders bevorzugt 0,5 mm bis 2 mm. Mit einer umlaufenden Isolierungslinie kann der gesamte periphere Randbereich der Flächenelektrode isoliert werden. Alternativ kann die Isolierungslinie zwischen zwei Stellen der Seitenkante der Flächenelektrode verlaufen, um lediglich den direkt an die Versiegelung angrenzenden Bereich der Flächenelektrode zu isolieren. Durch die Laserbearbeitung kann eine dünne, optisch unauffällige Isolierungslinie erzeugt werden, ohne die typischerweise darüber liegende Trägerfolie zu beschädigen. Die Linienbreite der Isolierungslinie kann beispielsweise kleiner oder gleich 500 µm betragen, bevorzugt von 10 µm bis 150 µm, besonders bevorzugt von 20 µm bis 50 µm. Die Laserstrahlung wird bevorzugt auf die Flächenelektrode fokussiert, um eine geringe Linienbreite und eine ausreichende Leistungsdichte zu erreichen. Der Fokus wird dann entlang einer Linie über die Flächenelektrode bewegt, bevorzugt mit einer Geschwindigkeit von 100 mm/s bis 10000 mm/s, besonders bevorzugt von 200 mm/s bis 5000 mm/s, wobei das leitfähige Material entfernt oder chemisch oder physikalisch dahingehend verändert wird, dass es keine oder eine stark reduzierte elektrische Leitfähigkeit aufweist, wodurch die Isolierungslinie erzeugt wird. Die Wellenlänge der Laserstrahlung beträgt bevorzugt von 150 nm bis 1200 nm, besonders bevorzugt von 200 nm bis 500 nm. Es hat sich gezeigt, dass dieser Bereich für die Wellenlänge bei der Verwendung üblicher elektrisch leitfähiger Schichten und üblicher Trägerfolien besonders geeignet ist, um die Linie selektiv in die elektrisch leitfähige Schicht einzubringen, ohne die Trägerfolie zu beschädigen. Als Laser wird bevorzugt ein Festkörper-Laser verwendet, beispielsweise ein Nd:Cr:YAG-Laser, ein Nd:Ce:YAG-Laser, ein Yb:YAG-Laser. Die Strahlung des Lasers kann zur Erzeugung der gewünschten Wellenlänge einfach oder mehrfach frequenzverdoppelt werden. Es können aber auch andere Laser verwendet werden, beispielsweise Faserlaser, Halbleiterlaser, Excimerlaser oder Gaslaser. Der Laser wird bevorzugt gepulst betrieben, insbesondere mit Pulsen im Nanosekunden- oder Pikosekundenbereich. Das ist besonders vorteilhaft im Hinblick auf eine hohe Leistungsdichte. Die Pulslänge beträgt bevorzugt kleiner oder gleich 50 ns. Die Pulsfrequenz beträgt bevorzugt von 1 kHz bis 200 kHz, besonders bevorzugt von 10 kHz bis 100 kHz, beispielsweise von 30 kHz bis 60 kHz. Die Ausgangsleistung der Strahlung des Lasers beträgt bevorzugt von 0,1 W bis 50 W, beispielsweise von 0,3 W bis 10 W. Das Erzeugen der Isolierungslinie kann vor oder nach dem Verschmelzen der Trägerfolien erfolgen.

Beim Anordnen des Schichtstapels in Verfahrensschritt (b) wird das Funktionselement bevorzugt so positioniert, dass es sich nicht bis zu einer der Seitenkanten des Schichtstapels erstreckt. Das Funktionselement wird so vorteilhaft in die Zwischenschicht eingelagert, ohne Kontakt zur umgebenden Atmosphäre zu haben. In einer besonders bevorzugten Ausführung wird eine dritte thermoplastische Schicht zwischen der ersten und der zweiten thermoplastischen Schicht angeordnet. Die dritte thermoplastische Schicht weist einen Ausschnitt auf, der in Form und Größe auf das Funktionselement abgestimmt ist. Das Funktionselement wird möglichst passgenau in den Ausschnitt eingesetzt, so dass es umlaufend von der thermoplastischen Schicht umgeben ist. Die dritte thermoplastische Schicht gleicht die Dicke des Funktionselements in den Bereichen um das Funktionselement aus, so dass eine mechanisch und optisch verbesserte Verbundscheibe entsteht.

Die thermoplastischen Schichten sind bevorzugt durch thermoplastische Folien ausgebildet. Die Folien werden bevorzugt entsprechend der Kontur der Verbundscheibe zurechtgeschnitten. Die Scheiben und die thermoplastischen Folien werden im Wesentlichen kongruent übereinander angeordnet. Die thermoplastischen Schichten können auch aus mehreren Folienabschnitten zusammengesetzt werden.

Es ist möglich, weitere thermoplastische Schichten zwischen der Außenscheibe und der Innenscheibe anzuordnen, die dann ebenfalls Teil der Zwischenschicht werden.

Zur elektrischen Kontaktierung werden elektrische Kabel, insbesondere Flachleiter, mit den Flächenelektroden verbunden und über die Seitenkante aus dem Schichtstapel herausgeführt. Der Anschluss der Kabel erfolgt natürlich vor dem Laminieren der Windschutzscheibe.

Eventuell vorhandene Drucke, beispielsweise opake Abdeckdrucke oder aufgedruckte Sammelleiter zur elektrischen Kontaktierung des Funktionselements werden bevorzugt im Siebdruckverfahren aufgebracht.

Das Laminieren erfolgt bevorzugt unter Einwirkung von Hitze, Vakuum und/oder Druck. Es können an sich bekannte Verfahren zur Lamination verwendet werden, beispielsweise Autoklavverfahren, Vakuumsackverfahren, Vakuumringverfahren, Kalanderverfahren, Vakuumlaminatoren oder Kombinationen davon.

Die Verbundscheibe ist bevorzugt in Gebäuden oder in Fortbewegungsmitteln für den Verkehr auf dem Lande, in der Luft oder zu Wasser, vorgesehen.

Die Verbundscheibe wird dabei bevorzugt als Fensterscheibe verwendet, beispielsweise als Fensterscheibe von Fahrzeugen, von Gebäuden oder von Räumen im Inneren von Gebäuden. Die Verbundscheibe wird besonders bevorzugt verwendet als Windschutzscheibe eines Kraftfahrzeugs mit elektrisch steuerbarer Sonnenblende, welche durch das Funktionselement realisiert ist.

Die Verbundscheibe ist bevorzugt als Fensterscheibe vorgesehen, besonders bevorzugt als Fensterscheibe eines Fahrzeugs, insbesondere Kraftfahrzeugs, eines Gebäudes oder eines Raums. In einer besonders vorteilhaften Ausgestaltung ist die Verbundscheibe die Windschutzscheibe eines Kraftfahrzeugs, insbesondere eines Personenkraftwagens, mit einer elektrisch steuerbaren Sonnenblende, die durch das Funktionselement realisiert ist. Während die seitlichen Kanten und die Oberkante eines solchen Funktionselements typischerweise durch den üblichen Abdeckdruck im Randbereich der Scheibe verdeckt sind, so ist die Unterkante im Durchsichtbereich der Scheibe angeordnet und daher nicht maskiert und sichtbar. Diese Unterkante des Funktionselements ist bevorzugt erfindungsgemäß versiegelt. Die optisch unauffällige Versiegelung ist hier besonders vorteilhaft.

Eine elektrisch steuerbare Sonnenblende kann die herkömmliche, mechanisch schwenkbare Sonnenblende überflüssig machen. Dadurch wird im Fahrgastraum des Fahrzeugs Platz gewonnen, das Gewicht des Fahrzeugs reduziert und beim starkem Abbremsen oder bei Unfall die Gefahr einer Kollision mit der Sonnenblende vermieden. Außerdem kann die elektrische Steuerung der Sonnenblende als komfortabler empfunden werden als das mechanische Herunterklappen.

Die Windschutzscheibe weist eine Oberkante und eine Unterkante auf sowie zwei zwischen Oberkante und Unterkante verlaufende Seitenkanten auf. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Die Oberkante wird häufig auch als Dachkante und die Unterkante als Motorkante bezeichnet. Die Kanten des Funktionselements werden entsprechend der Einbaulage der Windschutzscheibe bezeichnet. Die Unterkante des Funktionselements ist also diejenige seiner Seitenkanten, die von der Oberkante der Windschutzscheibe abgewandt ist und zum zentralen Sichtfeld weist. Die Oberkante des Funktionselements ist der Oberkante der Windschutzscheibe zugewandt. Die seitlichen Kanten verlaufen zwischen Oberkante und Unterkante.

Windschutzscheiben weisen ein zentrales Sichtfeld auf, an dessen optische Qualität hohe Anforderungen gestellt werden. Das zentrale Sichtfeld muss eine hohe Lichttransmission aufweisen (typischerweise größer als 70%). Das besagte zentrale Sichtfeld ist insbesondere dasjenige Sichtfeld, das vom Fachmann als Sichtfeld B, Sichtbereich B oder Zone B bezeichnet wird. Das Sichtfeld B und seine technischen Anforderungen sind in der Regelung Nr. 43 der Wirtschaftskommission der Vereinten Nationen für Europa (UN/ECE) (ECE-R43, "Einheitliche Bedingungen für die Genehmigung der Sicherheitsverglasungswerkstoffe und ihres Einbaus in Fahrzeuge") festgelegt. Dort ist das Sichtfeld B in Anhang 18 definiert.

Das Funktionselement ist dabei oberhalb des zentralen Sichtfelds (Sichtfeld B) angeordnet. Das bedeutet, dass das Funktionselement im Bereich zwischen dem zentralen Sichtfeld und der Oberkante der Windschutzscheibe angeordnet ist. Das Funktionselement muss nicht den gesamten Bereich abdecken, ist aber vollständig innerhalb dieses Bereichs positioniert und ragt nicht in das zentrale Sichtfeld hinein. Anders ausgedrückt weist das Funktionselement einen geringeren Abstand zur Oberkante der Windschutzscheibe auf als der zentrale Sichtbereich. Somit wird die Transmission des zentralen Sichtfelds nicht durch das Funktionselement beeinträchtigt, welches an einer ähnlichen Stelle positioniert ist wie eine klassische mechanische Sonnenblende im heruntergeklappten Zustand.

Bevorzugt ist der Bereich der Zwischenschicht, über den das Funktionselement mit der Außenscheibe und/oder der Innenscheibe verbunden ist, getönt oder gefärbt. Die Transmission dieses Bereichs im sichtbaren Spektralbereich ist also herabgesetzt gegenüber einer nicht getönten oder gefärbten Schicht. Der getönte/gefärbte Bereich der thermoplastischen Schicht erniedrigt somit die Transmission der Windschutzscheibe im Bereich der Sonnenblende. Insbesondere wird der ästhetische Eindruck des Funktionselements verbessert, weil die Tönung zu einem neutraleren Erscheinungsbild führt, das auf den Betrachter angenehmer wirkt. Ein besonders ästhetischer Eindruck des Fahrzeugs von außen wird erreicht, wenn der Bereich der Zwischenschicht zwischen dem Funktionselement und der Außenscheibe getönt ist. Der getönte oder gefärbte Bereich der thermoplastischen Schicht weist bevorzugt eine Transmission im sichtbaren Spektralbereich von 10 % bis 50 % auf, besonders bevorzugt von 20 % bis 40 %. Damit werden besonders gute Ergebnisse erreicht hinsichtlich Blendschutz und optischem Erscheinungsbild. Die thermoplastische Schicht kann durch eine einzelne thermoplastische Folie ausgebildet werden, in der der getönte oder gefärbte Bereich durch lokales Tönen oder Färben erzeugt wird. Solche Folien sind beispielsweise durch Koextrusion erhältlich. Alternativ können ein ungetönter Folienabschnitt und ein getönter oder gefärbter Folienabschnitt zur thermoplastischen Schicht zusammengesetzt werden. Der getönte oder gefärbte Bereich kann homogen gefärbt oder getönt sein, das heißt eine ortsunabhängige Transmission aufweisen. Die Tönung oder Färbung kann aber auch inhomogenen sein, insbesondere kann ein Transmissionsverlauf realisiert sein. In einer Ausgestaltung nimmt der Transmissionsgrad im getönten oder gefärbten Bereich zumindest abschnittsweise mit steigendem Abstand zur Oberkante ab. So können scharfe Kanten des getönten oder gefärbten Bereichs vermieden werden, so dass der Übergang von der Sonnenblende in den transparenten Bereich der Windschutzscheibe graduell verläuft, was ästhetisch ansprechender aussieht.

Die elektrische Steuerung der Sonnenblende erfolgt beispielsweise mittels Knöpfen, Dreh- oder Schiebereglern, die in den Armaturen des Fahrzeugs integriert sind. Es kann aber auch eine Schaltfläche zur Reglung der Sonnenblende in die Windschutzscheibe integriert sein, beispielsweise eine kapazitive Schaltfläche. Alternativ kann die Sonnenblende auch durch kontaktfreie Verfahren, beispielsweise durch das Erkennen von Gesten, oder in Abhängigkeit des durch eine Kamera und geeignete Auswerteelektronik festgestellten Zustands von Pupille oder Augenlid gesteuert werden.

In einer bevorzugten Ausgestaltung sind die Unterkanten des Funktionselements und des getönten Bereichs der thermoplastischen Schicht an die Form der Oberkante der Windschutzscheibe angepasst, was ein optisch ansprechenderes Erscheinungsbild bewirkt. Da die Oberkante einer Windschutzscheibe typischerweise gebogen ist, insbesondere konkav gebogen, ist auch die Unterkante des Funktionselements und des getönten Bereichs bevorzugt gebogen ausgestalten. Besonders bevorzugt sind die Unterkanten des Funktionselements im Wesentlichen parallel zur Oberkante der Windschutzscheibe ausgebildet. Es ist aber auch möglich, die Sonnenblende aus zwei jeweils geraden Hälften aufzubauen, die in einem Winkel zueinander angeordnet sind und der Form der Oberkante v-förmig angenähert sind.

Das Funktionselement kann in einer vorteilhaften Weiterbildung der Erfindung durch Isolierungslinien in Segmente aufgeteilt sein. Die Isolierungslinien sind insbesondere in die Flächenelektroden eingebracht sein, so dass die Segmente der Flächenelektrode elektrisch voneinander isoliert sind. Die einzelnen Segmente sind unabhängig voneinander mit der Spannungsquelle verbunden, so dass sie separat angesteuert werden können. So können verschiedene Bereich der Sonnenblende unabhängig geschaltet werden. Besonders bevorzugt sind die Isolierungslinien und die Segmente in Einbaulage horizontal angeordnet. Damit kann die Höhe der Sonnenblende vom Benutzer geregelt werden. Der Begriff "horizontal" ist hier breit auszulegen und bezeichnet eine Ausbreitungsrichtung, die zwischen den Seitenkanten der Windschutzscheibe verläuft. Die Isolierungslinien müssen nicht notwendigerweise gerade sein, sondern können auch leicht gebogen sein, bevorzugt angepasst an eine eventuelle Biegung der Oberkante der Windschutzscheibe, insbesondere im Wesentlichen parallel zur Oberkante der Windschutzscheibe. Vertikale Isolierungslinien sind natürlich auch denkbar. Die Isolierungslinien weisen beispielsweise eine Breite von 5 µm bis 500 µm, insbesondere 20 µm bis 200 µm auf. Die Breite der Segmente, also der Abstand benachbarten Isolierungslinien kann vom Fachmann gemäß den Anforderungen im Einzelfall geeignet gewählt werden. Bereits laminierte Mehrschichtfolien können nachträglich noch mittels Laserablation segmentiert werden.

Die Oberkante und die Seitenkanten des Funktionselements werden in Durchsicht durch die Windschutzscheibe bevorzugt von einem opaken Abdeckdruck verdeckt. Windschutzscheiben weisen typischerweise einen umlaufenden peripheren Abdeckdruck aus einer opaken Emaille auf, der insbesondere dazu dient, den zum Einbau der Windschutzscheibe verwendete Kleber vor UV-Strahlung zu schützen und optisch zu verdecken. Dieser periphere Abdeckdruck wird bevorzugt dazu verwendet, auch die Oberkante und die Seitenkante des Funktionselements zu verdecken, sowie die erforderlichen elektrischen Anschlüsse. Die Sonnenblende ist dann vorteilhaft ins Erscheinungsbild der Windschutzscheibe integriert und lediglich die Unterkante ist potentiell vom Betrachter zu erkennen. Bevorzugt weist sowohl die Außenscheibe als auch die Innenscheibe einen Abdeckdruck auf, so dass die Durchsicht von beiden Seiten gehindert wird.

Das Funktionselement (oder die Gesamtheit der Funktionselemente im vorstehend beschriebenen Fall von mehreren Funktionselementen) ist bevorzugt über die gesamte Breite der Windschutzscheibe angeordnet, abzüglich eines beidseitigen Randbereichs mit einer Breite von beispielsweise 2 mm bis 20 mm. Auch zur Oberkante weist das Funktionselement bevorzugt einen Abstand von beispielsweise 2 mm bis 20 mm auf. Das Funktionselement ist so innerhalb der Zwischenschicht eingekapselt und vor Kontakt mit der umgebenden Atmosphäre und Korrosion geschützt.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
- Fig. 1: eine Draufsicht auf eine erste Ausgestaltung der Verbundscheibe als Windschutzscheibe mit elektrisch steuerbarer Sonnenblende,
- Fig. 2: einen Querschnitt durch die Windschutzscheibe aus Figur 1,
- Fig. 3: eine vergrößerte Darstellung des Bereichs Z aus Figur 2,
- Fig. 4: einen Querschnitt durch ein Funktionselement vor und nach der erfindungsgemäßen Versiegelung,
- Fig.5: eine Draufsicht auf ein Funktionselement mit Isolierungslinie,
- Fig. 6: einen Querschnitt durch ein Funktionselement während einer Ausführungsform des Versiegelns,
- Fig. 7: einen Querschnitt durch ein Funktionselement während einer weiteren Ausführungsform des Versiegelns,
- Fig. 8: einen Querschnitt durch ein Funktionselement während einer weiteren Ausführungsform des Versiegelns,
- Fig. 9: einen Querschnitt durch ein Funktionselement während einer (nicht erfindungsgemäßen) weiteren Ausführungsform des Versiegelns,
- Fig. 10: einen Querschnitt durch ein Funktionselement während einer (nicht erfindungsgemäßen) weiteren Ausführungsform des Versiegelns und
- Fig. 11: ein Ausführungsbeispiel des erfindungsgemäßen Verfahrens anhand eines Flussdiagramms.

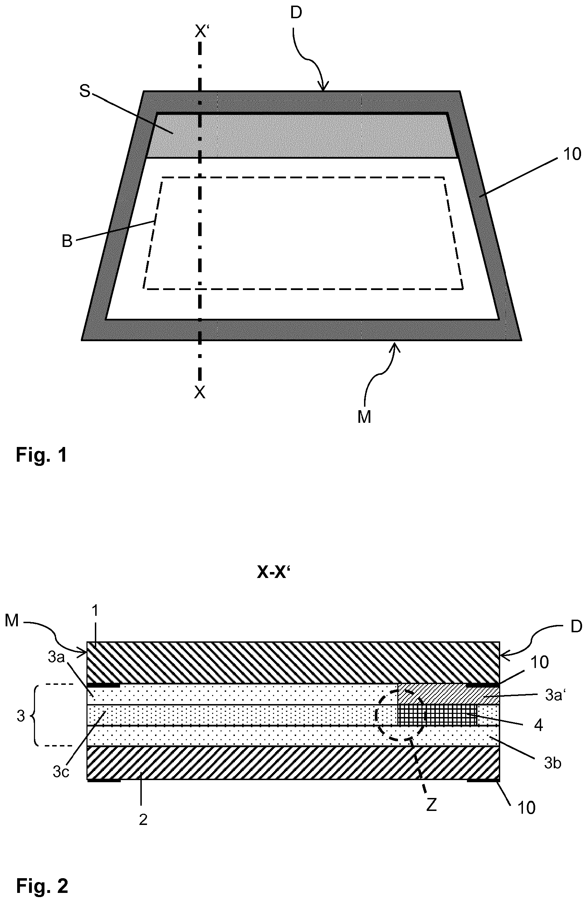

Fig. 1, Fig. 2 und Fig. 3 zeigen je ein Detail einer Windschutzscheibe mit elektrisch steuerbarer Sonnenblende, einer bevorzugten Ausgestaltung der Verbundscheibe mit elektrisch steuerbaren optischen Eigenschaften. Die Windschutzscheibe umfasst eine Außenscheibe 1 und eine Innenscheibe 2, die über eine Zwischenschicht 3 miteinander verbunden sind. Die Außenscheibe 1 weist eine Dicke von 2,1 mm auf und besteht aus einem grün eingefärbten Kalk-Natron-Glas. Die Innenscheibe 2 weist eine Dicke von 1,6 mm auf und besteht aus einem klaren Kalk-Natron-Glas. Die Windschutzscheibe weist eine in Einbaulage dem Dach zugewandte Oberkante D und eine in Einbaulage dem Motorraum zugewandte Unterkanten M auf.

Die Windschutzscheibe ist mit einer elektrisch steuerbaren Sonnenblende S ausgestattet in einem Bereich oberhalb des zentralen Sichtbereichs B (wie in ECE-R43 definiert). Die Sonnenblende S ist durch eine kommerzielle erhältliche PDLC-Mehrschichtfolie als Funktionselement 4 gebildet, die in die Zwischenschicht 3 eingelagert ist. Die Höhe der Sonnenblende beträgt beispielsweise 21 cm. Die Zwischenschicht 3 umfasst insgesamt drei thermoplastischen Schichten 3a, 3b, 3c, die jeweils durch eine thermoplastische Folie mit einer Dicke von 0,38 mm aus PVB ausgebildet sind. Die erste thermoplastische Schicht 3a ist mit der Außenscheibe 1 verbunden, die zweite thermoplastische Schicht 3b mit der Innenscheibe 2. Die dazwischenliegende dritte thermoplastische Schicht 3c weist einen Ausschnitt auf, in welchen die zugeschnittene PDLC-Mehrschichtfolie im Wesentlichen passgenau, das heißt an allen Seiten etwa bündig, eingelegt ist. Die dritte thermoplastische Schicht 3c bildet also gleichsam eine Art Passepartout für das etwa 0,4 mm dicke Funktionselement 4, welches somit rundum in thermoplastisches Material eingekapselt und dadurch geschützt ist.

Die erste thermoplastische Schicht 3a weist einen getönten Bereich 3a' auf, der zwischen dem Funktionselement 4 und der Außenscheibe 1 angeordnet ist. Die Lichttransmission der Windschutzscheibe wird dadurch im Bereich der Sonnenblende 4 zusätzlich herabgesetzt und das milchige Aussehen des PDLC-Funktionselements 4 im diffusiven Zustand abgemildert. Die Ästhetik der Windschutzscheibe wird dadurch deutlich ansprechender gestaltet. Die erste thermoplastische Schicht 3a weist im Bereich 3a' beispielsweise eine durchschnittliche Lichttransmission von 30% auf, womit gute Ergebnisse erzielt werden. Der Bereich 3a' kann homogen getönt sein. Oft ist es jedoch optisch ansprechender, wenn die Tönung in Richtung der Unterkante des Funktionselements 4 geringer wird, so dass der getönte und der ungetönte Bereich fließend ineinander übergehen. Im dargestellten Fall sind die Unterkanten des getönten Bereichs 3a' und des PDLC-Funktionselements 4 bündig angeordnet. Dies ist aber nicht notwendigerweise der Fall. Es ist ebenso möglich, dass der getönte Bereich 3a' über das Funktionselement 4 übersteht oder dass umgekehrt das Funktionselement 4 über den getönten Bereich 3a' übersteht.

Das steuerbare Funktionselement 4 ist eine Mehrschichtfolie, bestehend aus einer aktiven Schicht 5 zwischen zwei Flächenelektroden 8, 9 und zwei Trägerfolien 6, 7. Die aktive Schicht 5 enthält eine Polymermatrix mit darin dispergierten Flüssigkristallen, die sich in Abhängigkeit der an die Flächenelektroden angelegten elektrischen Spannung ausrichten, wodurch die optischen Eigenschaften geregelt werden können. Die Trägerfolien 6, 7 bestehen aus PET und weisen eine Dicke von beispielsweise 0,125 mm auf. Die Trägerfolien 6, 7 sind mit einer zur aktiven Schicht 5 weisenden Beschichtung aus ITO mit einer Dicke von etwa 100 nm versehen, welche die Flächenelektroden 8, 9 ausbilden. Die Flächenelektroden 8, 9 sind über nicht dargestellte Sammelleiter (beispielweise ausgebildet durch einen silberhaltigen Siebdruck) und nicht dargestellte Verbindungskabel mit der Bordelektrik verbindbar.

Die Windschutzscheibe weist, wie üblich, einen umlaufenden peripheren Abdeckdruck 10 auf, der durch eine opake Emaille auf den innenraumseitigen Oberflächen (in Einbaulage dem Innenraum des Fahrzeugs zugewandt) der Außenscheibe 1 und der Innenscheibe 2 ausgebildet ist. Der Abstand des Funktionselements 4 zur Oberkante D und den Seitenkanten der Windschutzscheibe ist kleiner als die Breite des Abdeckdrucks 10, so dass die Seitenkanten des Funktionselements 4 - mit Ausnahme der zum zentralen Sichtfeld B weisenden Seitenkante - durch den Abdeckdruck 10 verdeckt sind. Auch die nicht dargestellten elektrischen Anschlüsse werden sinnvollerweise im Bereich des Abdeckdrucks 10 angebracht und somit versteckt.

Entlang der unteren, zum zentralen Sichtfeld B weisenden Seitenkante des Funktionselements 4 sind die Trägerfolien 6, 7 miteinander verschmolzen. Das Funktionselement 4 ist entlang dieser Seitenkante versiegelt. Diffusion in die oder aus der aktiven Schicht 5 wird dadurch unterbunden. Die Versiegelung verhindert insbesondere die Diffusion von Weichmachern und anderen Kleberbestandteilen der thermoplastischen Zwischenschicht 3 in die aktive Schicht 5, wodurch die Alterung des Funktionselements 4 vermindert wird. Die Versiegelung ist optisch unauffällig, daher fällt die untere Seitenkante des Funktionselements 4, welche nicht durch den Abdeckdruck 10 verdeckt ist, nicht störend auf.

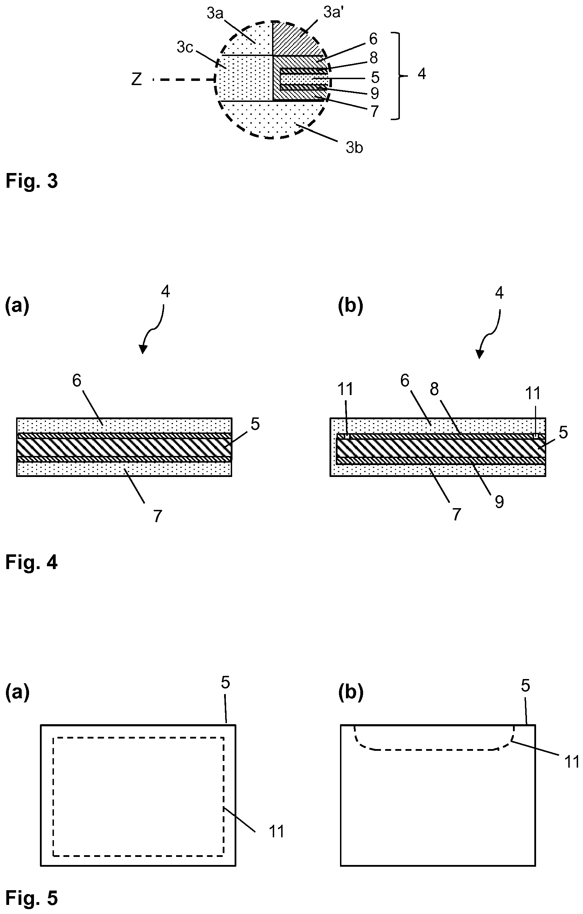

Fig. 4 zeigt schematisch einen Querschnitt durch ein Funktionselement 4, umfassend die aktive Schicht 5, die Flächenelektroden 8, 9 und die Trägerfolien 6, 7. Das Funktionselement 4 wurde aus einer kommerziell erhältlichen PDLC-Mehrschichtfolie in der gewünschten Form und Größe ausgeschnitten. Es weist zunächst offene Seitenkanten auf (Fig. 4a), so dass insbesondere die aktive Schicht 5 direkten Kontakt zur Umgebung hat. Nach der erfindungsgemäßen Versiegelung sind die Trägerfolien 6, 7 entlang eines Bereichs der Seitenkante miteinander verschmolzen (Fig. 4b). Die aktive Schicht 5 ist wirksam von der Umgebung getrennt.

Um Kurzschlüsse zu vermeiden, die infolge eines direkten Kontakts zwischen den Flächenelektroden 8,9 nach dem Verschmelzen der Trägerfolien 6, 7 entstehen könnten, kann eine beispielsweise umlaufende Isolierungslinie 11 in mindestens eine Flächenelektrode 6 eingebracht sein, mit einem Abstand zur Seitenkante von beispielsweise 1 mm. Die Isolierungslinie 11 isoliert den peripheren Randbereich der Flächenelektrode 6 elektrisch, so dass er nicht mehr mit Spannung versorgt wird und kein Kurzschluss entstehen kann. Die Isolierungslinie 11 kann beispielsweise mit einem gepulst betriebenen Nd-YAG-Laser, dessen Emissionswellenlänge von 1064 nm mittels zweifacher Frequenzverdopplung eine Wellenlänge von 355 nm umgewandelt wurde. Die Pulslänge beträgt beispielsweise 16 ns, die Pulsfrequenz 60 kHz, die Laserleistung 60 W und die Bewegungsgeschwindigkeit 1000 mm/s. Die Laserstrahlung wird auf die Flächenelektrode fokussiert.

Fig. 5 zeigt eine Draufsicht auf ein Funktionselement 4, wobei der Verlauf der Isolierungslinie 11 schematisch zu erkennen ist. Mit einer umlaufenden Isolierungslinie 11 kann der gesamte periphere Randbereich der Flächenelektrode isoliert werden (Fig. 5a). Alternativ kann die Isolierungslinie 11 zwischen zwei Stellen der Seitenkante der Flächenelektrode verlaufen, um lediglich den direkt an die Versiegelung angrenzenden Bereich der Flächenelektrode zu isolieren (Fig. 5b).

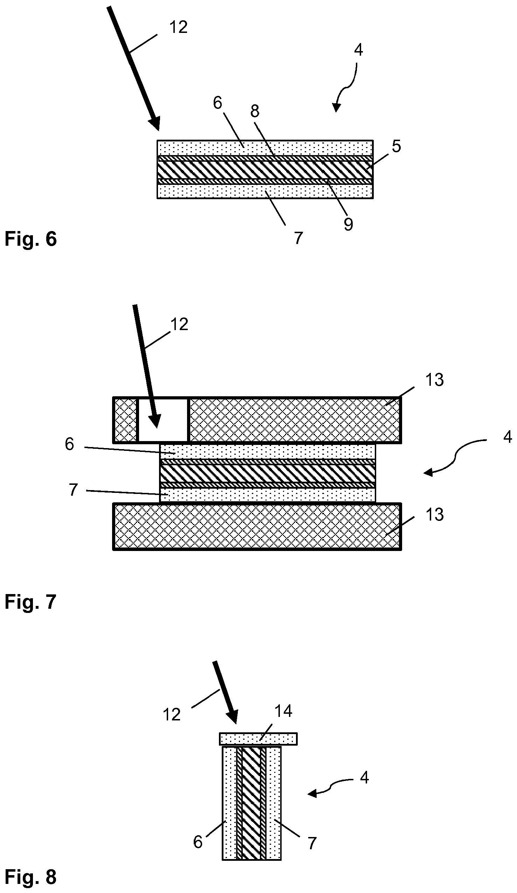

Fig. 6 zeigt ein Funktionselement 4 während einer ersten Ausführungsform des Versiegelns eines Bereichs seiner Seitenkante mittels Laserbestrahlung. Das Funktionselement 4 liegt im Wesentlichen horizontal auf einer nicht dargestellten festen Unterlage auf. Die Laserstrahlung 12 trifft von oben auf die Seitenkante des Funktionselements 4. Die Trägerfolien 6, 7 werden erwärmt und teilweise aufgeschmolzen. Das Material der oberen Trägerfolien 6 fließt nach unten und verbindet sich mit der zweiten Trägerfolie 7.

Fig. 7 zeigt ein Funktionselement 4 während einer zweiten Ausführungsform des Versiegelns eines Bereichs seiner Seitenkante mittels Laserbestrahlung. Im Unterschied zur Ausführung aus Figur 6 liegt das Funktionselement 4 nicht frei auf einer Unterlage, sondern ist zwischen zwei Fixierplatten 13 horizontal angeordnet. Die obere Fixierplatte 13 weist eine Durchführung oder Aussparung auf, deren Form der Kontur des zu versiegelnden Bereichs der Seitenkante des Funktionselements 4 entspricht und deren Breite beispielsweise 5 mm beträgt. Der zu versiegelnde Bereich der Seitenkante des Funktionselements 4 ist unterhalb der Aussparung angeordnet, so dass er für die Laserstrahlung 12 zugänglich ist. liegt im Wesentlichen horizontal auf einer nicht dargestellten festen Unterlage auf. Die Seitenkante wird durch die Aussparung hindurch mit der Laserstrahlung 12 bestrahlt und dadurch die Trägerfolien 6, 7 miteinander verschmolzen, wie in Figur 6.

Fig. 8 zeigt ein Funktionselement 4 während einer dritten Ausführungsform des Versiegelns eines Bereichs seiner Seitenkante mittels Laserbestrahlung. Das Funktionselement 4 ist im Wesentlichen vertikal angeordnet, wobei der zu versiegelnde Bereich der Seitenkante nach oben weist. Auf den zu versiegelnden Bereich ist ein Streifen einer PET-Folie als thermoplastisches Verbindungsstück 14 aufgelegt. Die Seitenkante mit dem Verbindungsstück 14 wird von oben mit Laserstrahlung 12 bestrahlt, wobei die Trägerfolien 6, 7 über das Verbindungsstück 14 miteinander verschmolzen werden.

Für die Ausführungen der Figuren 6, 7 und 8 können im Wesentlichen identische Laserparameter verwendet werden. Geeignet ist beispielsweise ein CO₂-Laser mit einer Wellenlänge von 10,6 µm im Dauerstrichbetrieb mit einer Ausgangsleistung von 250 W. Der Laserstrahlung 12 sollte auf dem Funktionselement defokussiert sein mit einer Spotgröße von beispielsweise 2 mm. Sie wird mit einer Geschwindigkeit von beispielsweise 0,1 m/s bis 0,5 m/s entlang der zu versiegelnden Seitenkante bewegt.

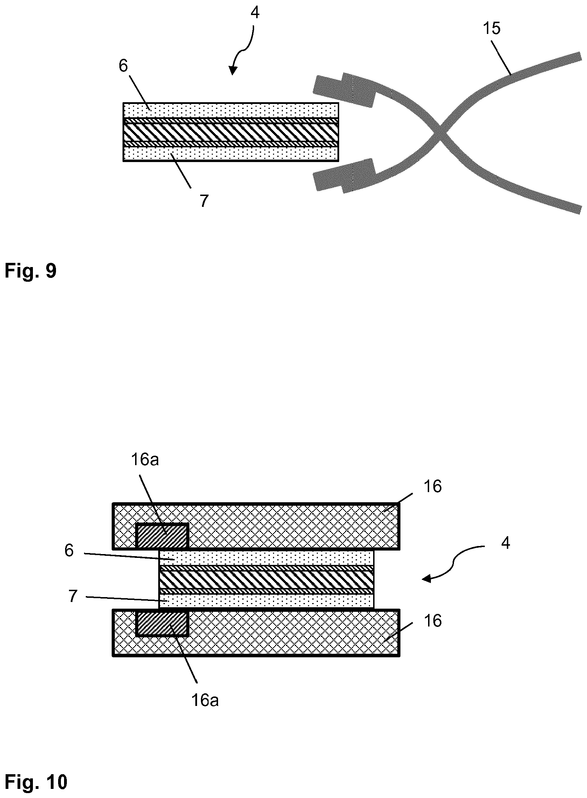

Fig. 9 zeigt ein Funktionselement 4 während einer ersten (nicht erfindungsgemäßen) Ausführungsform des Versiegelns eines Bereichs seiner Seitenkante mittels eines beheizten Werkzeugs. Das Werkzeug ist eine beheizte Zange 15. Die Wirkstellen der Zange 15 sind beheizbar und werden auf eine Temperatur von beispielsweise 250 °C erhitzt. Die Trägerfolien 6, 7 des Funktionselements 4 werden entlang des gesamten zu versiegelnden Bereichs der Seitenkante mittels der Zange 15 gegeneinandergepresst, wobei sie durch die erhitzten Wirkflächen angeschmolzen werden und sich miteinander verbinden.

Fig. 10 zeigt ein Funktionselement 4 während einer zweiten (nicht erfindungsgemäßen) Ausführungsform des Versiegelns eines Bereichs seiner Seitenkante mittels eines beheizten Werkzeugs. Als beheizte Werkzeuge werden hier zwei Heizplatten 16 verwendet, zwischen denen das Funktionselement angeordnet ist. Die Heizplatten 16 weisen einen beheizten Bereich 16a auf, dessen Form der Kontur des zu versiegelnden Bereichs der Seitenkante des Funktionselements 4 entspricht. Die beheizten Bereiche 16a der Heizplatten 16 sind kongruent zueinander angeordnet und der zu versiegelnde Bereich der Seitenkante des Funktionselements 4 ist zwischen den beheizten Bereichen 16a angeordnet, so dass die Trägerfolien 6, 7 angeschmolzen und miteinander verbunden werden. Die Temperatur der beheizten Bereich 16a beträgt beispielsweise 250 °C.

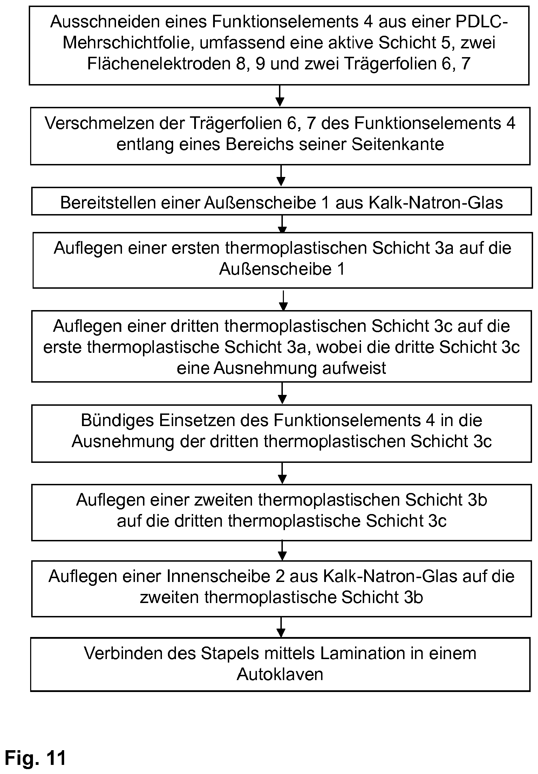

Fig. 11 zeigt ein Ausführungsbeispiel des erfindungsgemäßen Herstellungsverfahrens anhand eines Flussdiagramms.

### Bezugszeichenliste:

- (1): Außenscheibe
- (2): Innenscheibe
- (3): thermoplastische Zwischenschicht
- (3a): erste Schicht der Zwischenschicht 3
- (3a'): getönter Bereich der ersten Schicht 3a
- (3b): zweite Schicht der Zwischenschicht 3
- (3c): dritte Schicht der Zwischenschicht 3
- (4): Funktionselement mit elektrisch regelbaren optischen Eigenschaften
- (5): aktive Schicht des Funktionselements 4
- (6): erste Trägerfolie des Funktionselements 4
- (7): zweite Trägerfolie des Funktionselements 4
- (8): Flächenelektrode des Funktionselements 4
- (9): Flächenelektrode des Funktionselements 4
- (10): Abdeckdruck
- (11): Isolierungslinie

- (12): Laserstrahlung
- (13): Fixierplatte
- (14): thermoplastisches Verbindungsstück
- (15): Beheizte Zange
- (16): Heizplatte
- (16a): Beheizter Bereich der Heizplatte 16

- S: elektrisch regelbare Sonnenblende
- B: zentrales Sichtfeld der Windschutzscheibe

- D: Oberkante der Windschutzscheibe, Dachkante
- M: Unterkante der Windschutzscheibe, Motorkante

- X-X': Schnittlinie
- Z: vergrößerter Bereich

## Patentansprüche

1. Verfahren zur Herstellung einer Verbundscheibe mit elektrisch steuerbaren optischen Eigenschaften, wobei
a) ein Funktionselement (4) mit elektrisch steuerbaren optischen Eigenschaften bereitgestellt wird, umfassend eine aktive Schicht (5) zwischen einer ersten Trägerfolie (6) und einer zweiten Trägerfolie (7) aus einem zweiten thermoplastischen Material, und
die erste Trägerfolie (6) und die zweite Trägerfolie (7) entlang zumindest eines Bereichs der Seitenkante des Funktionselements (4) direkt miteinander verschmolzen werden, oder mittelbar über ein thermoplastisches Verbindungsstück (14), welches aus dem zweiten thermoplastischen Material besteht, miteinander verschmolzen werden,
wobei das direkte oder mittelbare Verschmelzen der ersten Trägerfolie (6) und der zweiten Trägerfolie (7) mittels Laserstrahlung (12) erfolgt und die Laserstrahlung (12) auf dem Funktionselement (4) defokussiert ist mit einem Durchmesser des Strahlprofils von 0,5 mm bis 5 mm,
b) eine Außenscheibe (1), eine erste thermoplastische Schicht (3a), das Funktionselement (4), eine zweite thermoplastische Schicht (3b) und eine Innenscheibe (2) in dieser Reihenfolge übereinander angeordnet werden, wobei die erste thermoplastische Schicht (3a) und die zweite thermoplastische Schicht (3b) aus einem ersten thermoplastischen Material bestehen, das sich vom zweiten thermoplastischen Material unterscheidet und das einen Weichmacher enthält,
c) die Außenscheibe (1) und die Innenscheibe (2) durch Lamination verbunden werden, wobei aus der ersten thermoplastischen Schicht (3a) und der zweiten thermoplastischen Schicht (3b) eine Zwischenschicht (3) mit eingelagertem Funktionselement (4) gebildet wird.

2. Verfahren nach Anspruch 1, wobei das erste thermoplastische Material weichmacherhaltiges Polyvinylbutyral (PVB) ist.

3. Verfahren nach Anspruch 1 oder 2, wobei das zweite thermoplastische Material Polyethylenterephthalat (PET) ist.

4. Verfahren nach einem der Ansprüche 1 bis 3, wobei das Funktionselement (4) ein PDLC-Funktionselement oder ein SPD-Funktionselement ist.

5. Verfahren nach einem der Ansprüche 1 bis 4, wobei die Laserstrahlung (12) mit einer Wellenlänge von 1 µm bis 15 µm und einer Ausgangsleistung von 100 W bis 500 W im Dauerstrichbetrieb oder mit einer Pulsfrequenz von mindestens 10 kHz mit einer Geschwindigkeit von höchsten 1 m/s entlang des Bereichs der Seitenkante des Funktionselements (4) bewegt wird.

6. Verfahren nach einem der Ansprüche 1 bis 5, wobei die erste Trägerfolie (6) und die zweite Trägerfolie (7) direkt miteinander verschmolzen werden, wobei das Funktionselement (4) zwischen zwei Fixierplatten (13) angeordnet ist und der Bereich der Seitenkante des Funktionselements (4) durch eine Durchführung in einer der Fixierplatten (13) hindurch mit der Laserstrahlung (12) beaufschlagt wird.

7. Verfahren nach einem der Ansprüche 1 bis 5, wobei die erste Trägerfolie (6) mittelbar über das thermoplastisches Verbindungsstück (14) mit der zweiten Trägerfolie (7) verschmolzen wird, indem das Funktionselement (4) vertikal angeordnet wird, so dass ein zu versiegelnder Bereich der Seitenkante nach oben weist, das Verbindungsstück (14) auf den Bereich der Seitenkante aufgelegt wird und das Verbindungsstück (14) mit der Laserstrahlung (12) bestrahlt wird, wobei das dadurch aufgeschmolzene Material unter der Wirkung der Schwerkraft in Richtung der Trägerfolien (6,7) fließt und sich mit diesen verbindet.

8. Verfahren nach einem der Ansprüche 1 bis 7, wobei mittels Laserstrahlung eine Isolierungslinie (11) in mindestens eine Flächenelektrode (8, 9) des Funktionselements (4) eingebracht wird, welche einen Randbereich der Flächenelektrode (8, 9), der an den Bereich der Seitenkante des Funktionselements (4) mit den verschmolzenen Trägerfolien (6, 7) angrenzt, von der restlichen Flächenelektrode (8, 9) elektrisch isoliert.

## Claims

1. Method for producing a laminated pane having electrically controllable optical properties, wherein
a) a functional element (4) having electrically controllable optical properties is provided, comprising an active layer (5) between a first carrier film (6) and a second carrier film (7) made of a second thermoplastic material, and
the first carrier film (6) and the second carrier film (7) are directly fused together along at least one region of the lateral edge of the functional element (4), or are indirectly fused together via a thermoplastic connecting piece (14) which consists of the second thermoplastic material,
wherein the direct or indirect fusion of the first carrier film (6) and the second carrier film (7) takes place by means of laser radiation (12) and the laser radiation (12) is defocused on the functional element (4), with a beam profile diameter of from 0.5 mm to 5 mm,
b) an outer pane (1), a first thermoplastic layer (3a), the functional element (4), a second thermoplastic layer (3b), and an inner pane (2) are arranged on top of one another in this order, wherein the first thermoplastic layer (3a) and the second thermoplastic layer (3b) consist of a first thermoplastic material which differs from the second thermoplastic material and which contains a plasticiser,
c) the outer pane (1) and the inner pane (2) are connected by lamination, wherein an intermediate layer (3) having an embedded functional element (4) is formed from the first thermoplastic layer (3a) and the second thermoplastic layer (3b).

2. Method according to claim 1, wherein the first thermoplastic material is plasticiser-containing polyvinyl butyral (PVB).

3. Method according to claim 1 or 2, wherein the second thermoplastic material is polyethylene terephthalate (PET).

4. Method according to any of claims 1 to 3, wherein the functional element (4) is a PDLC functional element or an SPD functional element.

5. Method according to any of claims 1 to 4, wherein the laser radiation (12), with a wavelength of 1 µm to 15 µm and an output power of 100 W to 500 W in continuous operation, or a pulse frequency of at least 10 kHz, is moved at a speed of at most 1 m/s along the region of the lateral edge of the functional element (4).

6. Method according to any of claims 1 to 5, wherein the first carrier film (6) and the second carrier film (7) are directly fused together, wherein the functional element (4) is arranged between two fixing plates (13), and the region of the lateral edge of the functional element (4) is acted upon by the laser radiation (12) through a passage in one of the fixing plates (13).

7. Method according to any of claims 1 to 5, wherein the first carrier film (6) is indirectly fused to the second carrier film (7) via the thermoplastic connecting piece (14), in that the functional element (4) is arranged vertically, so that a region to be sealed of the lateral edge points upward, the connection piece (14) is placed on the region of the lateral edge, and the connecting piece (14) is irradiated with the laser radiation (12), wherein the material melted as a result of this flows under the effect of gravity in the direction of the carrier films (6, 7) and connects thereto.

8. Method according to any of claims 1 to 7, wherein an insulation line (11) is introduced into at least one planar electrode (8, 9) of the functional element (4) by means of laser radiation, which insulation line electrically insulates an edge region of the planar electrode (8, 9), which adjoins the region of the lateral edge of the functional element (4) having the fused carrier films (6, 7), from the remaining surface electrode (8, 9).

## Revendications

1. Procédé de fabrication d'un vitrage feuilleté comportant des propriétés optiques pouvant être commandées électriquement, dans lequel
a) un élément fonctionnel (4) comportant des propriétés optiques pouvant être commandées électriquement est fourni, comprenant une couche active (5) entre un premier film de support (6) et un second film de support (7) constitués d'un second matériau thermoplastique, et
le premier film de support (6) et le second film de support (7) sont fusionnés directement l'un avec l'autre le long d'au moins une zone du bord latéral de l'élément fonctionnel (4), ou sont fusionnés indirectement l'un avec l'autre par l'intermédiaire d'une pièce de liaison (14) thermoplastique qui est constituée du second matériau thermoplastique,
dans lequel la fusion directe ou indirecte du premier film de support (6) et du second film de support (7) est réalisée au moyen d'un rayonnement laser (12) et le rayonnement laser (12) est défocalisé sur l'élément fonctionnel (4) avec un diamètre du profil de rayon de 0,5 mm à 5 mm,
b) une vitre extérieure (1), une première couche thermoplastique (3a), l'élément fonctionnel (4), une seconde couche thermoplastique (3b) et une vitre intérieure (2) sont superposés dans cet ordre, dans lequel la première couche thermoplastique (3a) et la seconde couche thermoplastique (3b) sont constituées d'un premier matériau thermoplastique qui est différent du second matériau thermoplastique et qui contient un plastifiant,
c) la vitre extérieure (1) et la vitre intérieure (2) sont reliées par stratification, dans lequel une couche intermédiaire (3) comportant l'élément fonctionnel (4) incorporé est formée à partir de la première couche thermoplastique (3a) et de la seconde couche thermoplastique (3b).

2. Procédé selon la revendication 1, dans lequel le premier matériau thermoplastique est du polybutyral de vinyle (PVB) plastifié.

3. Procédé selon la revendication 1 ou 2, dans lequel le second matériau thermoplastique est du polyéthylène téréphtalate (PET).

4. Procédé selon l'une des revendications 1 à 3, dans lequel l'élément fonctionnel (4) est un élément fonctionnel PDLC ou un élément fonctionnel SPD.

5. Procédé selon l'une des revendications 1 à 4, dans lequel le rayonnement laser (12) comportant une longueur d'onde de 1 µm à 15 µm et une puissance de sortie de 100 W à 500 W en fonctionnement continu ou comportant une fréquence d'impulsions d'au moins 10 kHz est déplacé à une vitesse d'au plus 1 m/s le long de la zone du bord latéral de l'élément fonctionnel (4).

6. Procédé selon l'une des revendications 1 à 5, dans lequel le premier film de support (6) et le second film de support (7) sont fusionnés directement l'un avec l'autre, dans lequel l'élément fonctionnel (4) est disposé entre deux plaques de fixation (13) et la zone du bord latéral de l'élément fonctionnel (4) est sollicitée par le rayonnement laser (12) à travers un passage dans l'une des plaques de fixation (13).

7. Procédé selon l'une des revendications 1 à 5, dans lequel le premier film de support (6) est fusionné indirectement avec le second film de support (7) par l'intermédiaire de la pièce de liaison (14) thermoplastique en disposant l'élément fonctionnel (4) verticalement, de sorte qu'une zone à sceller du bord latéral est orientée vers le haut, la pièce de liaison (14) est posée sur la zone du bord latéral et la pièce de liaison (14) est irradiée par le rayonnement laser (12), dans lequel le matériau ainsi fondu s'écoule sous l'effet de la gravité en direction des films de support (6,7) et se lie à ceux-ci.

8. Procédé selon l'une des revendications 1 à 7, dans lequel, au moyen d'un rayonnement laser, une ligne d'isolation (11) est introduite dans au moins une électrode de surface (8, 9) de l'élément fonctionnel (4), laquelle ligne d'isolation isole de manière électrique une zone marginale de l'électrode de surface (8, 9) du reste de l'électrode de surface (8, 9), laquelle zone marginale est adjacente à la zone du bord latéral de l'élément fonctionnel (4) comportant les films de support (6, 7) fusionnés.
